# EUROPEAN PATENT APPLICATION

(11) **EP 1 870 821 A1**
(43) Date of publication of application: **26.12.2007**
(21) Application number: 05721671.5
(22) Date of filing: 30.03.2005
(51) Int. Cl.: G06F 17/21

(54) **STRUCTURED DATA CONVERSION METHOD**

(71) Applicant: Fujitsu Ltd., Kawasaki-shi, Kanagawa 211-8588 (JP)
(72) Inventor: Nakashima, Satoshi, Fujitsu Limited, Kawasaki-shi, Kanagawa, 2118588 (JP); Odagiri, Junichi, Fujitsu Limited, Kawasaki-shi, Kanagawa, 2118588 (JP); Yoshida, Shigeru, Fujitsu Limited, Kawasaki-shi, Kanagawa, 2118588 (JP); Yamaguchi, Takuroh, Fujitsu Limited, Kawasaki-shi, Kanagawa, 2118588 (JP)
(74) Representative: HOFFMANN EITLE
(86) International application number: PCT/JP2005/006173
(87) International publication number: WO 2006/103777

(57) **Abstract**

A structured data conversion device is designed to convert a set of first structured data into a set of second structured data that is described in a language different from that of the first structured data, and comprises: an inverse conversion information creation unit extracting data as inverse conversion information from the first structured data, the data that is extracted being deleted when the first structured data is converted into the second structured data and being necessary when the second structured data is inversely converted into the first structured data; and an inverse conversion information storing unit embedding in the second structured data the inverse conversion information when the first structured data is converted into the second structured data.

## Description

### Technical Field

The present invention relates to a technique of converting structured data written in one format into structured data written in another format, and particularly to a technique of converting structured data in which reconversion is taken into consideration.

### Background Art

In recent years, various systems such as systems for personal purposes, for companies, for local governments, and the like have been connected to one another via the Internet, and are associated with one another for providing Web pages, EDI, EC, and the like. For these purposes, information is exchanged via a wide range of methods, and XML (extensible Markup Language) has attracted interest as a common base format because XML has a flexible displaying function by which data can be structured, and is suitable for computer processing such as data exchanging and data processing.

XML is a language the fundamental version 1.0 of which was defined by the W3C (World Wide Web Consortium) in February 1998 for the purpose of facilitating the use of SGML (Standard Generalized Markup Language) standardized by the ISO in 1986, for use in Internet.

HTML (HyperText Markup Language), which is a language for creating Web pages, is designed for displaying and tags are fixed such that there is a problem in that HTML cannot meet the requirements of information processing performed by a computer on the basis of the tags. In contrast, XML allows users to define tags arbitrarily and has a language structure by which meanings can be given to character strings in data and therefore is suitable for information processing performed by computers.

Today, XML has spread widely, and is especially utilized for associating servers and systems with each other.

Data written in XML has the merit of employing a format that allows flexible description of structured data having a hierarchy, and allows easy processing such as an automatic search and rewriting by using programs. However, using only XML, information cannot be displayed in such a manner that a human can read the information easily because the style in which something will be displayed is not a part of the information included in XML, in contrast to HTML or the like. Accordingly, in general situations, data in the XML format is processed, the processed data is converted into HTML data, the HTML data is sent to a client PC, and the HTML data is displayed via a Web browser on the PC.

XSLT is a widely employed technique for converting XML data into HTML data because XSLT is a standard XML conversion technique. There are also other techniques similar to XSLT.

Patent Document 1 discloses an example of a technique for converting structured data.

In the system for providing information about the delivery status of home-delivery services that is disclosed in Patent Document 1, an intermediate device is provided between an information provider and user terminals for allowing confirmation of delivery status even when search conditions are not unknown, and conversion from HTML into XML and conversion from XML into HTML are performed when data is exchanged between the intermediate device and the information providing device operated by the information provider.

Also, Patent Document 2 discloses a technique in which conversion is performed with indexes and property values that specify depth that are attached to XML data so that original data can be restructured after performing editing processes such as sorting, partial cutting, or the like.

As conversions that are performed on structured data such as XML, HTML and the like have spread widely as described above, the need has arisen for data to be acquired as XML data and to be subject to various data processes on client PCs operated by users, not only for displaying via a Web browser by receiving data in HTML format.

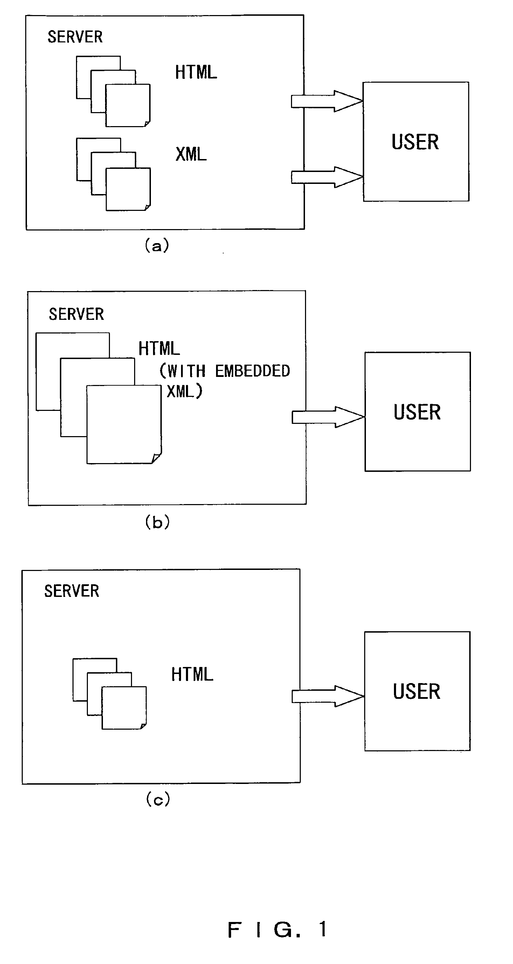

Fig. 1(a) and Fig. 1(b) respectively show methods that are currently employed in order to bring about a situation in which the same data can be used both for displaying and information processing.

In the method shown in Fig. 1 (a), a Web server holds both the original XML data and the HTML data created by converting the original XML data, and these two types of data are made public to users.

In this method, the file for the XML data and the file for the HTML data both have to be managed, and this results in higher maintenance costs. Further, the user side has to receive both the HTML data and XML data, which decreases response efficiency.

In the method shown in Fig. 1 (b), when HTML data is created by converting XML data, the entirety of the XML data is embedded in the HTML data, and the user side extracts the XML data from the HTML data in order to perform information processing on the extracted data.

In this method, in contrast to the method shown in Fig. 1(a), only one file for the HTML data has to be managed in a Web server. However, because the HTML data includes the embedded XML data, the size of the HTML data is the combined size of both of the two types of data or larger.

Also, the user side must extract the embedded XML data from the HTML data, which is laborious.

Another method for realizing this is inverse conversion from HTML into XML.

In order to change a configuration of systems with the minimum number of process steps, it is desirable that not only the conversion from XML into HTML but also that inverse conversion from HTML into XML can be performed. However, conventional techniques for XSLT or the like do not allow the above inverse conversion for the reason explained as follows.

XML allows arbitrary definitions of structure and meanings of data, and is useful for various types of data processing, which makes XML important. However, in HTML, a display style is described, and the relationship between tags and values in XML format can not be described. Accordingly, the conversion from HTML into XML cannot be realized because important information is omitted.

In view of the above, it is an object of the present invention to provide a structured data conversion device that allows the conversion from XML into HTML and the inverse conversion from HTML into XML.

It is another object of the present invention to provide a structured data conversion device that allows the conversion from XML into HTML and the inverse conversion into XML by which the original XML data can be reproduced completely.
Patent Document 1
Japanese Patent Application Publication No. 2002-128232
Patent Document 2
Japanese Patent Application Publication No. 2004-62600

### Disclosure of the Invention

A structured data conversion device according to the present invention is designed for converting a first set of structured data into a second set of structured data that is described in a language different from that of the first set of structured data, and comprises an inverse conversion information creation unit and an inverse conversion information storing unit in order to solve the above problem.

The inverse conversion information creation unit extracts, as inverse conversion information from the first structured data, data that is deleted when the first structured data is converted into the second structured data and that is necessary when the second structured data is inversely converted into the first structured data.

The inverse conversion information storing unit embeds in the second structured data the inverse conversion information when the first structured data is converted into the second structured data.

By configuring in this way, it is possible to reproduce the first structured data (the data before conversion) by using the inverse conversion information in the second structured data (the data after conversion).

It is also possible to further comprise an inverse conversion unit inversely converting the second structured data into the first structured data by using the inverse conversion information embedded in the second structured data.

By configuring in this way, it is possible to inversely convert the second structured data into the first structured data.

Further, it is also possible to employ a configuration in which the inverse conversion information storing unit embeds the inverse conversion information in such a manner that display results of the second structured data after conversion that are displayed via a Web browser are not affected.

An example of the above embedding is to embed the information in an anchor tag or in a comment tag if the second structured data is HTML data.

Thereby, the displaying of the second structured data is not affected by the embedded inverse conversion information.

Also, it is possible to employ a configuration in which, when the first structured data includes repeated structures, the inverse conversion information creation unit creates the inverse conversion information corresponding to the entirety of the repeated structures, and the inverse conversion information storing unit embeds the inverse conversion information in such a manner that the embedded inverse conversion information corresponds to the entirety of the repeated structures.

By configuring in this way, it is possible to embed the inverse conversion data effectively when the first structured data includes repeated structures.

Further, it is also possible to further comprise a partial inverse conversion unit converting a part of the second structured data into a part of the first structured data.

By configuring in this way, it is possible to inversely convert only parts that are specified by a user.

It is also possible to further comprise a search unit searching, on the basis of a search condition specified by a user, the second structured data that is a result of converting the first structured data.

By configuring in this way, it is possible to perform a search process on the second structured data after conversion.

Further, the inverse conversion information is information specifying a tag name in the first structured data and correspondences between, a tag and an element's content.

By configuring in this way, it is possible to minimize the size of the inverse conversion information that is embedded.

Additionally, the scope of the present invention includes not only a structured data conversion device, but also a method, a program, and a storage medium used for structured data conversion.

### Brief Description of the Drawings

Fig. 1 (a) shows a currently employed method in which one and the same data is used for both displaying and information processing;
Fig. 1 (b) shows another currently employed method in which one and the same data is used for both displaying and information processing;
Fig. 1 (c) shows a method according to an embodiment;
Fig. 2 schematically shows a configuration of a structured data conversion device according to an embodiment;
Fig. 3 shows an example of conversion of a structured document performed by a structured data conversion device according to an embodiment;
Fig. 4 is a flowchart for a conversion process from XML data into HTML data performed by a conversion process unit;
Fig. 5 (a) shows an example of an item name table;
Fig. 5 (b) shows an example of an item value table;
Fig. 5 (c) shows an example of HTML style specification 222 read out onto a memory unit;
Fig. 6 shows a schematic example of an XML memory structure;
Fig. 7 is a flowchart for an inverse conversion process from HTML data into XML data performed by an inverse conversion process unit;
Fig. 8 schematically shows a conversion performed by a structured data conversion device in the case when a structured document that is to be converted includes repeated structures;
Fig. 9 shows an example of conversion in the case when a structured document to be converted includes repeated structures;
Fig. 10 is a flowchart for a process performed when a structured document includes repeated structures, and this document is to be converted into a document in table format;
Fig. 11 (a) shows an example of an item name table;
Fig. 11 (b) shows an example of an item value table;
Fig. 11 (c) shows an example of an HTML style specification read out onto a memory unit;
Fig. 11 (d) shows an example of a generated anchor tag;
Fig. 11 (e) shows an example of an HTML description;
Fig. 12 is a flowchart for a process executed by the inverse conversion process unit when a structured document that was converted into a document in table format by a structured data conversion device according an embodiment is to be inversely converted;
Fig. 13 shows a partial inverse conversion process;
Fig. 14 is a flowchart showing the partial inverse conversion process executed by a partial inverse conversion process unit;
Fig. 15 (a) shows a search process executed in the present embodiment;
Fig. 15 (b) is another view of the search process executed in the present embodiment;
Fig. 16 is a flowchart for the search process executed by a search process unit;
Fig. 17 shows an example of a case when inverse conversion information is embedded in a comment tag in HTML data;
Fig. 18 shows a system configuration of a computer; and
Fig. 19 shows an example of media.

### Best Modes for Carrying Out the Invention

Hereinafter, one embodiment of the present invention will be explained by referring to the drawings.

Fig. 1 (c) shows a conversion from XML data into HTML data performed by a structured data conversion device according to the present embodiment.

In the structured data conversion device according to the present embodiment, when XML data is converted into HTML data, information that would be lost in methods of conventional techniques when being converted into HTML and that is necessary for reconversion into XML data (this information is referred to as inverse conversion information hereinafter) is efficiently embedded in HTML data.

Thereby, it is possible to suppress increases in data size that would be caused after the conversion, in contrast to the method of embedding the entirety of the original XML data as shown in Fig. 1 (b). Additionally, this inverse conversion information is information specifying the correspondence between tag names and element contents that are necessary at the minimum for the inverse conversion; accordingly, even with this information being embedded in the data before conversion, the size of the data after the conversion is not affected.

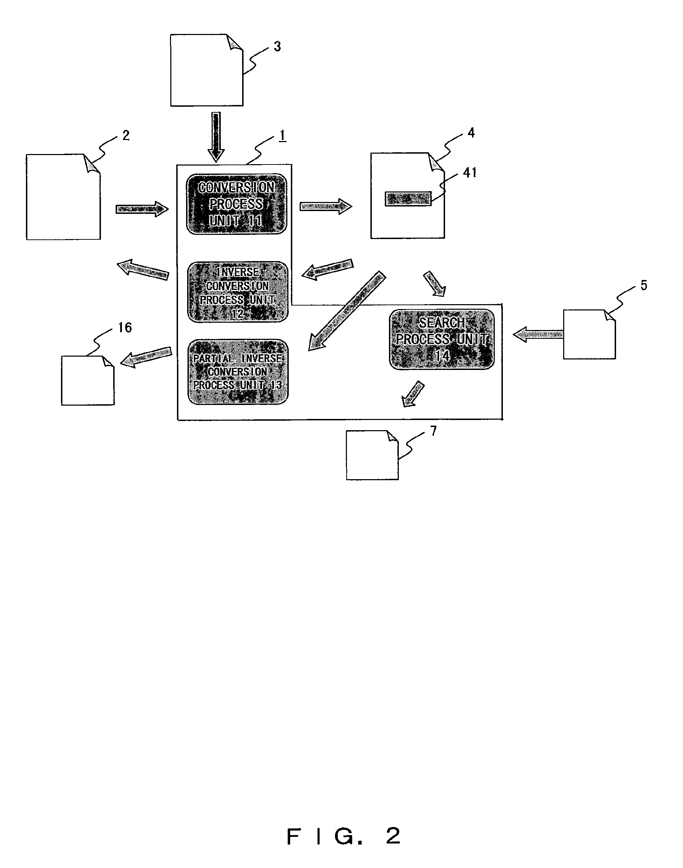

Fig. 2 schematically shows a configuration of the structured data conversion device according to the present embodiment.

In Fig. 2, a structured data conversion device 1 comprises a conversion process unit 11, an inverse conversion process unit 12, a partial inverse conversion process unit 13, and a search process unit 14.

The conversion process unit 11 reads XML data 2 that is to be converted and a conversion definition 3, and converts the XML data 2 into HTML data 4 on the basis of the conversion definition 3. In the HTML data 4 that is the result of the conversion performed by the conversion process unit 11, inverse conversion information 41 is embedded. The inverse conversion process unit 12 inversely converts the HTML data 4 into the XML data 2, i.e., creates the XML data 2 from the HTML data 4 by using the inverse conversion information in the HTML data 4. The partial inverse conversion process unit 13 inversely converts a part of the HTML data 4 created by the conversion process unit 11, and creates a partial XML data 6 that is a part of the XML data 2. The partial XML data 6 created by the partial inverse conversion process unit 13 is also created by using the inverse conversion information 41. The search process unit 14 performs a search for the HTML data 4 that is the result of the conversion performed by the conversion process unit 11, and outputs the search result7. The HTML data 4 created by the conversion process unit 11 includes the inverse conversion information 41, and accordingly searches similar to searches for XML data can be performed on the HTML data 4. This point will be described later in detail.

Additionally, the structured data conversion device according to the present embodiment can employ not only a configuration including all of the conversion process unit 11, the inverse conversion process unit 12, the partial inverse conversion process unit 13, and the search process unit 14 as the constituent elements, but also a configuration including only one or some of such elements, e.g., only the conversion process unit 11, or only the conversion process unit 11 and the inverse conversion process unit 12.

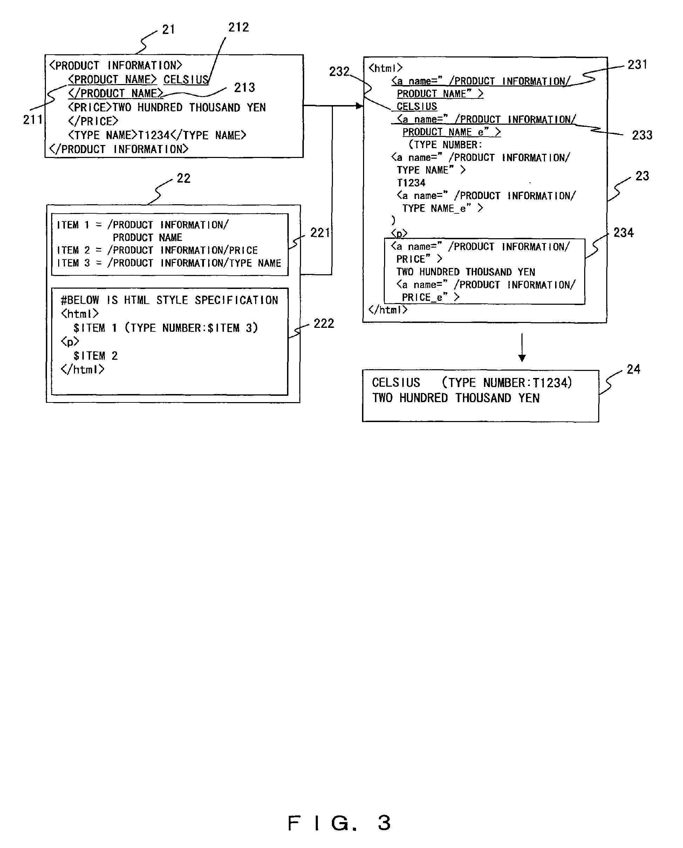

Fig. 3 shows an example of conversion of a structured document performed by a structured data conversion device according to the embodiment of the present invention. Fig. 3 shows, as an example, a case in which XML data is converted into HTML data.

In Fig. 3, XML data 21 that is to be converted includes as information the tag names (element names) of <product information>, <product name>, <price>, and <type name> in addition to the element contents that is the main data; however, the relationship between these tags and the element contents is usually lost when the data is converted into HTML data.

On the basis of the instruction based on a conversion definition 22, the conversion process unit 11 converts, into the inverse conversion information, information such as the relationship between the tag names, the tags and the element contents that are usually lost upon conversion from the XML data 21 into HTML data 23, and embeds in the HTML data 23 the information that is necessary for the reconversion.

In Fig. 3, the conversion definition 22 specifies an item definition 221 and HTML style specification 222, and in the item definition 221, hierarchical positions of the respective elements in the target XML data 21 are specified. For example, <product name> on the layer lower than that of <product information> that is an element in the XML data 21 is specified to be item 1 in the item definition 221. Also, the HTML style specification 222 specifies the structure of the HTML data 23 after conversion.

The conversion process unit 11 acquires from the item definition 221 in the conversion definition 22 information on the positions of the respective elements that constitute the target XML data 21, and also acquires data (element contents) at that corresponding position from the XML data 21. For example, on the basis of the specification of "/product information/product name" in item 1, it is recognized that the high layer in the XML data 21 specifies the position of the item "product name" of the "product", and "CELSIUS", which is the data at the corresponding position in the XML data 21, is acquired.

Thereafter, upon conversion into the HTML data 23, information for each set of data in the item definition 221, that is, information on the position of each element is embedded as inverse conversion information in such a manner that this embedded information does not cause any disadvantage for displaying the converted HTML data. By, for example, embedding the information in anchor (reference mark) tags, which is one of hyperlink functions of HTML, the displaying of the HTML data via a Web browser is not affected.

In the HTML data 23 shown in Fig. 3 that is the result of the conversion, the start-tag and the end-tag that included data (element contents) between them are respectively replaced by the anchors. For example, a start-tag 221 for data (element contents) 222 is replaced by an anchor 231, and an end-tag 213 is replaced by an anchor 233, and the anchors are placed respectively above and below data 232.

When the above HTML data 23 is displayed via a Web browser, the tags are not displayed; accordingly, the inverse conversion information that was embedded as the anchors are not displayed, as shown as a display image 24.

Also, in the above method, it is possible to restore the original XML data 21 by using, upon reconversion, the inverse conversion information included in the HTML data 23 that is the result of the conversion from the XML data 21.

For the inverse conversion into the XML data 23, the embedded inverse conversion information is extracted, and the conversion into XML is performed on the basis of the extracted inverse conversion information.

In, for example, Fig. 3,a descriptive portion 234 that corresponds to
<a name = "/product information/price">
two hundred thousand yen
<a name = "/product information/price_e"> is converted, by reproducing the tags in the XML data 21 on the basis of the inverse conversion information embedded as the anchors, into the XML data description of
<product information>
<price> two hundred thousand yen </price>
</product information>.

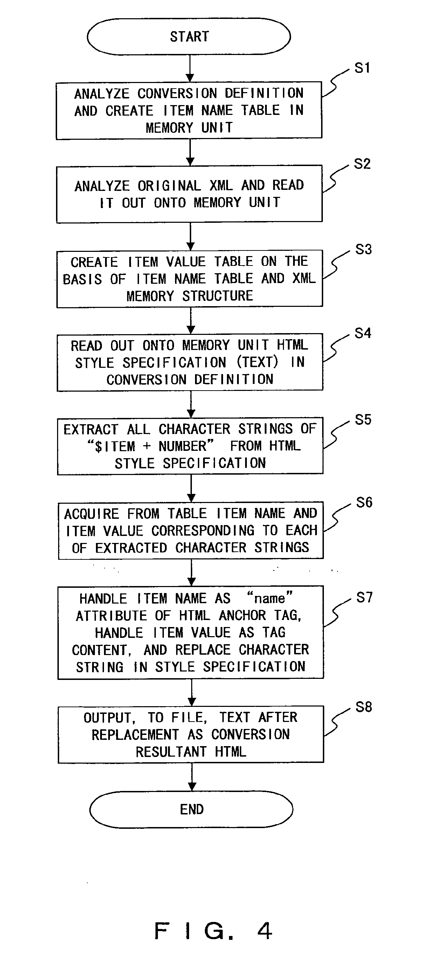

Fig. 4 is a flowchart for a conversion process from the XML data 21 into the HTML data 23 performed by the conversion process unit 11.

In the explanation below, operations performed by the conversion process unit are explained by using an example in which the target XML data 21 shown in Fig. 3 is converted by using the conversion definition 22 in order to obtain the HTML data 23 as the conversion result.

In Fig. 4, when the process starts, the target XML data 21 and the conversion definition 22 are read and written to a memory unit, and thereafter the conversion definition 22 is analyzed in step S1 and an item name table is created in the memory unit.

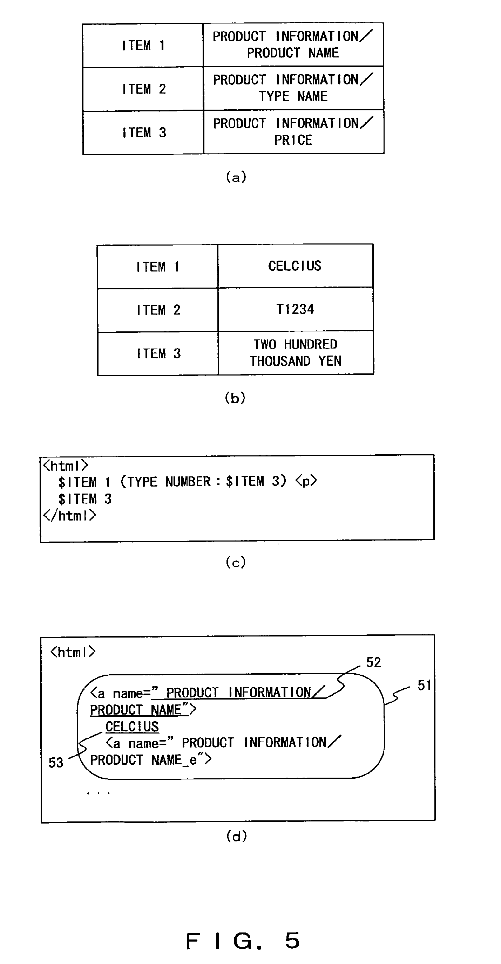

Fig. 5 (a) shows an example of the item name table. The item name table shown in Fig. 5 (a) shows the relationship between the respective items and the positions of the elements, in the XML data 21, to which the items respectively correspond. The item name table is created on the basis of the item definition 221 in the conversion definition 22.

Next, in step S2, the conversion process unit 11 analyzes the XML data 21 that is to be converted, and an XML memory structure specifying the tree structure is read out onto the memory unit.

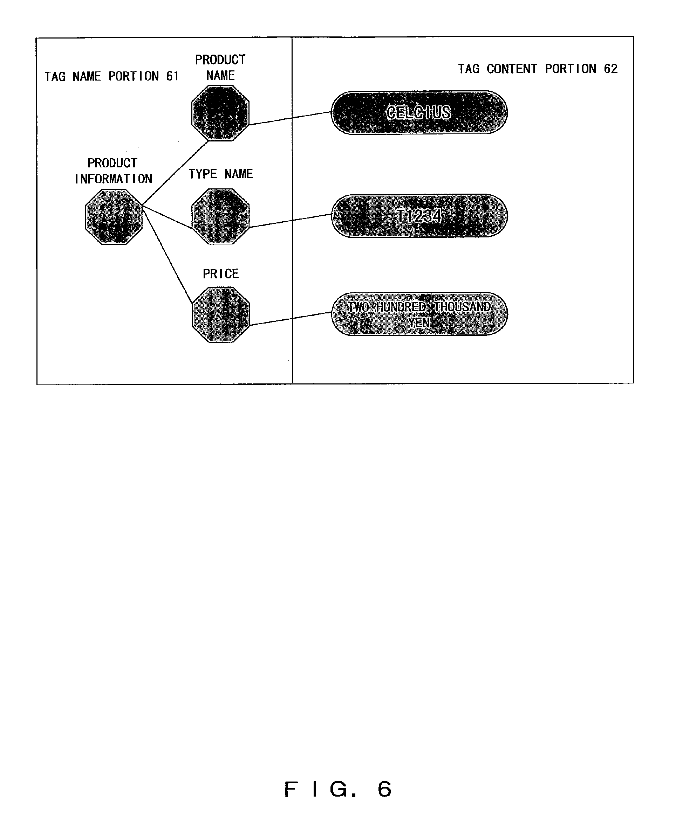

Fig. 6 shows a schematic example of the XML memory structure.

In Fig. 6, the XML memory structure comprises a tag name portion 61 and a tag content portion 62, and in the tag name portion, hierarchical positions of the respective pieces of data (element contents) are shown by using tag names, and the respective pieces of data (element contents) are shown in the tag content portion 62.

In step S3, the conversion process unit 11 creates an item value table on the basis of the item name table created in step S1 and the XML memory structure created in step S2.

Fig. 5 (b) shows an example of the item value table.

This item value table specifies the relationship between the respective items in the item name table and the respective pieces of data (element contents) in the XML data 21. In the example shown in Fig. 5 (b), CELCIUS as item 1, T1234 as item 2, and two hundred thousand yen as item 3 are shown.

Next, in step S4, the conversion process unit 11 reads out the HTML style specification portion 222 in the conversion definition 22.

Fig. 5 (c) shows an example of the HTML style specification 222 read out onto the memory unit. This HTML style specification 222 serves as a template for the HTML data 23 after conversion.

The conversion process unit 11 extracts, in step S5, all of the character strings "$item + number" ($item 1, $item 2, ......) from the HTML style specification read out onto the memory unit in step S4, acquires, in step S6, item names corresponding to the extracted character strings and the item values corresponding to these item names from the item name table and the item value table, handling the position information of the item names as "name" attributes of the HTML anchor tags, and replaces the item values, which is a tag content between tags, with the character strings in the HTML style specification in step S7.

Fig. 5 (d) shows an example of the HTML style in which the above replacement was performed.

Fig. 5 (d) shows an example in which item 1 was replaced, and in a descriptive portion 51, "product information/product name", which is the position information of item 1, is the "name" attribute 52 of the anchor tag, and CELCIUS, which is the item value of item 1, is described as tag content 53 between the start-tag and the end-tag.

After performing the above replacement, the conversion process unit 11, in step S8, outputs, as the HTML data 23 that is the conversion result, a text in the HTML style after the conversion as shown in Fig. 5 (d), and terminates this process.

As described above, in the data conversion performed by a structured data conversion device according to the present embodiment, it is possible to embed in the conversion result the inverse conversion information that is necessary for the inverse conversion. Also, when the converted data in which the inverse conversion information was embedded is displayed by using a Web browser, the inverse conversion information is not displayed.

Also, because the information embedded in the HTML data as the inverse conversion information is position information or the like for tags, the data size is smaller than that in the case of embedding the original XML data entirely.

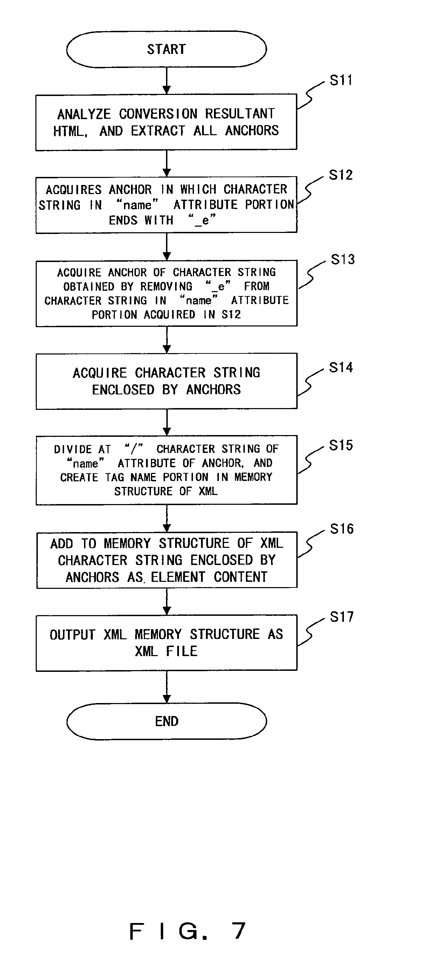

Fig. 7 is a flowchart for an inverse conversion process from the HTML data 23 into the XML data 21 performed by the inverse conversion process unit 12.

In the explanations hereinafter, operations performed by the inverse conversion process unit 12 are explained by using an example in which the HTML data 23that was converted by using a structured data conversion device according to the present embodiment is inversely converted in order to obtain the XML data 21 as the conversion result as shown in Fig. 3.

In Fig. 7, when the process starts, the inverse conversion process unit 12 reads the target HTML data 23 from the memory unit, and analyzes this HTML data 23 in step S11, and extracts all the anchor tag portions.

Next, in step S12, the inverse conversion process unit 12 acquires anchors in which the character string in the "name" attribute portion ends with "_e" from among the anchors extracted in step S11, and, in step S13, acquires anchors corresponding to the anchors acquired in step S12, of the character strings obtained by removing "_e" from the character strings in the "name" attribute portions. Then, the inverse conversion process unit 12, in step S14, acquires the character strings included between a pair of the anchors obtained in steps S12 and S13.

Next, in step S15, the inverse conversion process unit 12 divides, at "/", the character string of the "name" attribute of the anchor acquired in step S12 or S13, and creates a tag name portion 61 in the memory structure of the XML data shown in Fig. 6. Also, in step S16, the inverse conversion process unit 12 adds to the memory structure of the XML data shown in Fig. 6 the character string included by the anchors acquired in step S14, and creates a tag content portion 62.

In step S17, the inverse conversion unit converts the above memory structure of the XML data into the XML data, and outputs this data as an XML file, and this process is terminated.

By performing reconversion on the HTML data obtained by converting the XML data, it is possible to reproduce the original XML data by using a structured data conversion device according to the present embodiment.

Next, conversion and inverse conversion performed in the cases when pre-conversion data that is to be converted includes repeated structures such as a table, a list, or the like are explained.

XML, for example, often includes a plurality of data having the same structure as its characteristic.

When XML data having the repeated structures as described above is expressed in HTML, a table format (TABLE tag) or a list format (UL tag) is often employed.

Because repeated structures are often enormous in number, attaching inverse conversion information to all the items makes file size large. In the present embodiment, in the case when XML data including the repeated structures is to be converted into data in a table format of HTML or the like, a pair of pieces of inverse conversion information is embedded in the entirety (the entirety of the repeated structures) of the table (or the list).

Thereby, in a conversion performed by the structured data conversion device according to the present embodiment, it is possible to reduce the size of the inverse conversion information that is embedded when converting target data if the target data includes repeated structures.

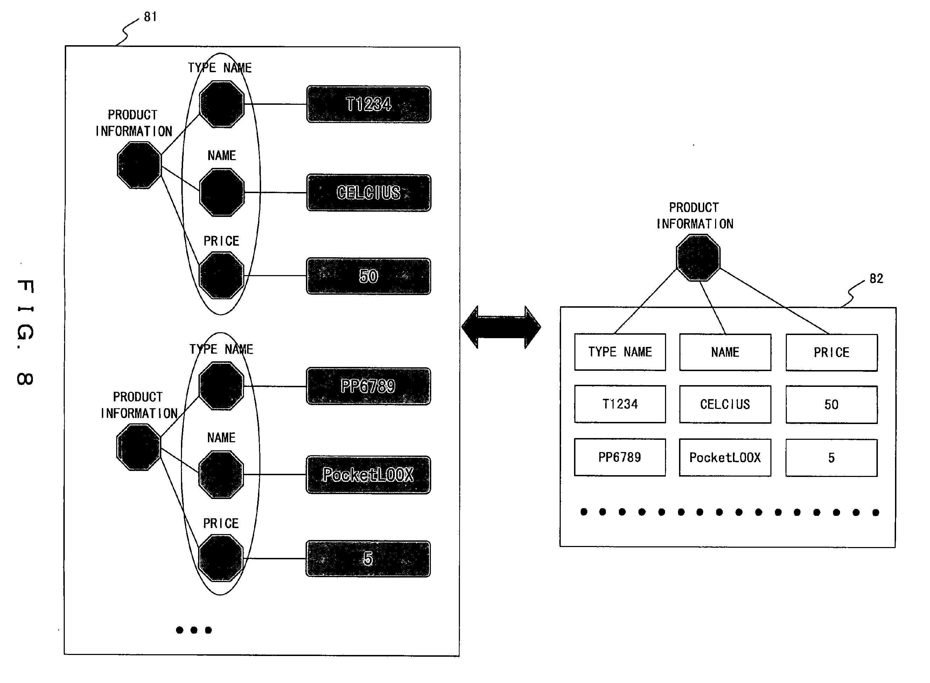

Fig. 8 schematically shows a conversion performed by a structured data conversion device in the case when a structured document that is to be converted includes repeated structures.

The structured data conversion device analyzes a structured document 81 that is to be converted, and when there are repeated structures such as a table or the like, the structured data conversion device puts pieces of inverse conversion information for these repeated structures into one piece of information, and inserts this one piece of information into a structured document 82 that is the conversion result.

Also, when the converted structured document 82 is to be inversely converted, the original structured document 81 is created by using the inverse conversion information that was embedded efficiently for the repeated structures such as a table or the like.

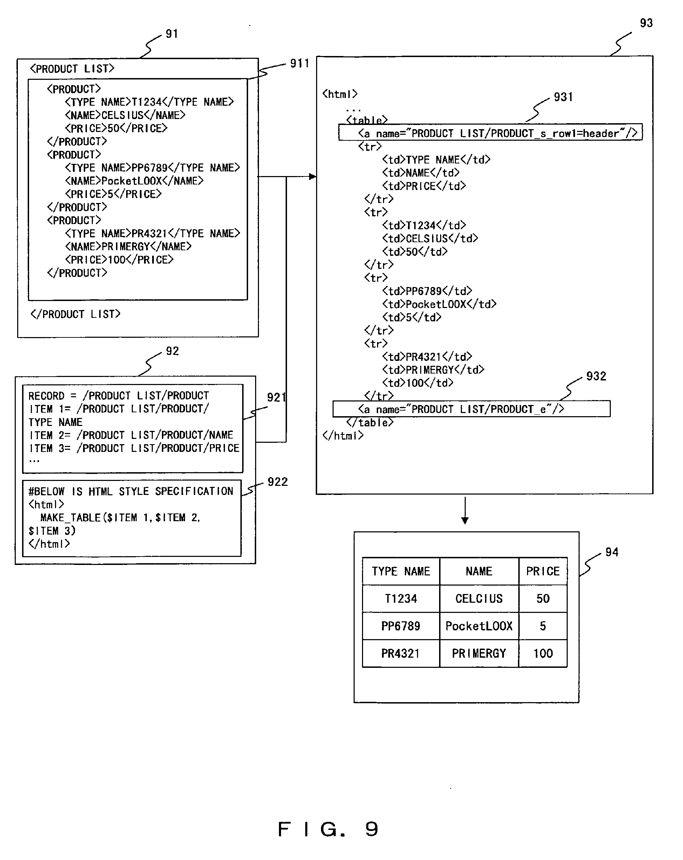

Fig. 9 shows an example of conversion in the case when a structured document to be converted includes repeated structures. Fig. 9, similarly to Fig. 3, shows an example of converting the XML data into the HTML data.

In Fig. 9, XML data 91 that is the structured document to be converted is converted into HTML data 93 by using conversion definition 92 defined by the users.

The XML data 91 shown in Fig. 9 includes repeated structures 911 having <type>, <name>, and <price>, and in the conversion definition 92, these portions are defined as items on the basis of item definition 921. Also, in HTML style specification 922, the conversion into the table format is defined as indicated by "MALE_TABLE". The portion of "record" in the item definition 921 specifies the portion that is to become the records in the table, and "MALE_TABLE" in the HTML style specification 922 specifies the style using a table format in which items that are held as parameters are used as lines.

When the conversion process unit 11 converts the XML data 91 on the basis of the conversion definition 92, the HTML data 93 is obtained as the conversion result.

The HTML data 93 specifies a table including in the respective lines the element contents in the XML data 91, i.e., <type>, <name>, and <price>, on the basis of the definition in the conversion definition 92. Also, in this HTML data 93, inverse conversion information 931 and 932 is embedded as anchors respectively at the top and the bottom of the table.

As described above, when a structured document that is to be converted includes repeated structures, it is possible to efficiently embed in lump, in the structured document that is the conversion result, inverse conversion information that is to be used for the inverse conversion.

Also, a display result 94 shows the result of displaying by using a Web browser the HTML data 93 that is the conversion result, and the inverse conversion information is embedded as an anchor; accordingly, the displaying result is not affected by the inverse conversion information.

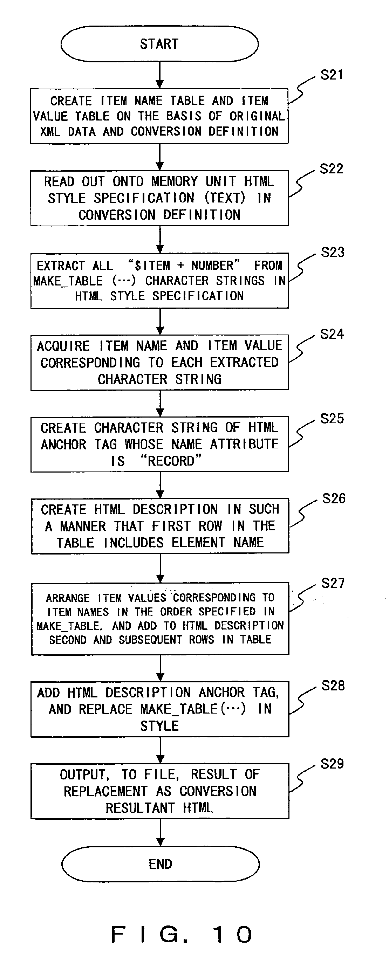

Fig. 10 is a flowchart for a process performed when a structured document includes the repeated structures as described above, and this document is to be converted into a document in a table format.

In the explanations hereinafter, operations performed by the conversion process unit are explained by using an example in which the HTML data 91, shown in Fig. 9, is converted by using the conversion definition 92, and the HTML data 93 is obtained as the conversion result.

In Fig. 10, when the process starts, the XML data 91 to be converted and the conversion definition 92 are read out onto a memory unit, and the conversion definition 92 is analyzed in step S21, and an item name table and an item value table are created in the memory unit. This process is the same as that is performed in steps S1 and S2 shown in Fig. 4.

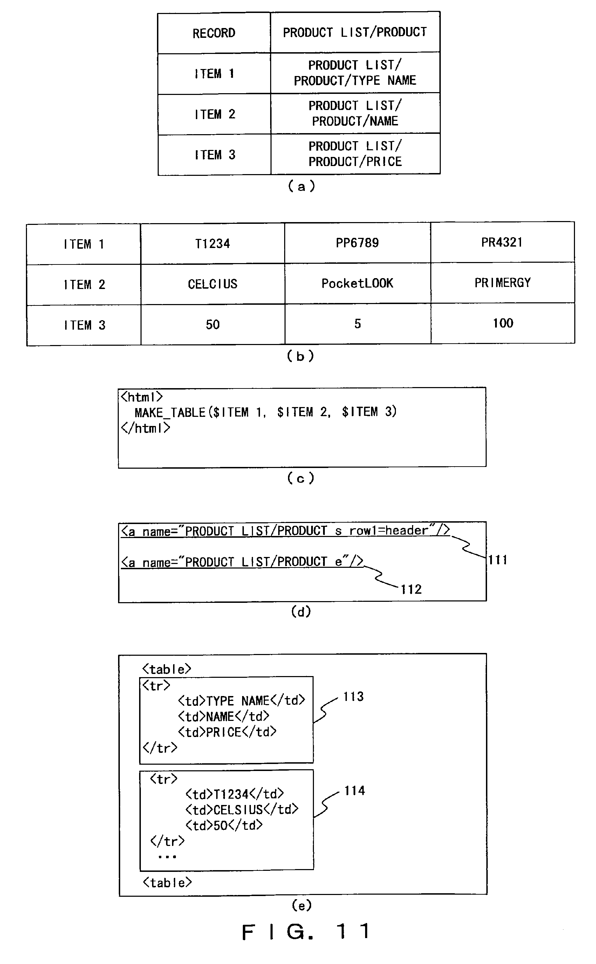

Figs. 11 (a) and 11 (b) respectively show the item name table and the item value table created in the above process. The item name table shown in Fig. 11 (a) shows the relationship between the respective items and the positions of the elements corresponding to the items in the XML data 91. This item name table is created on the basis of an item definition 291 in the conversion definition 92.

The item name table shown in Fig. 11 (a) includes the item of "record" in addition to items 1 through 3 that are included in the item name table shown in Fig. 5 (a).

In the item value table shown in Fig. 11 (b), one item corresponds to a plurality of pieces of data because the XML data 91 to be converted includes repeated structures, which is different from the item value table shown in Fig. 5 (b).

Next, in step S22, the conversion process unit 11 reads out onto the memory unit the HTML style specification 922 in the conversion definition 92.

Fig. 11(c) shows an example of the above HTML style specification 922 read out onto the memory unit. This HTML style specification 922 serves as a template for the HTML data 93 after conversion. In Fig. 11 (c), it is specified that the HTML data 93 is formed as a table including in data lines of the respective items 1 through 3 defined in the item value table as indicated by "MAKE_TABLE ($item 1, $item 2, $item 3).

In step S23, the conversion process unit 11 extracts all the character strings of "$item + number" ($item 1, $item 2,......) that are the parameters for the HTML style specification "MAKE_TABLE (......)" that was read out onto the memory unit. Thereafter, in step S24, the conversion process unit 11 acquires the item names corresponding to the extracted character strings and the item values corresponding to the item names from the item name table and the item value table.

Next, in step S25, the conversion process unit 11 creates the character string having the "name" attribute of the HTML anchor tag on the basis of the position information of the "record" in the item name 92 ("/product name/product" in Fig. 9.).

Fig. 11 (d) shows an example of the anchor tag created in step S25. In Fig. 11 (d), the numeral 111 denotes a start tag, and this start-tag is embedded in the starting position in the table portion in the XML data 91 after conversion. Also, in Fig. 11 (d), the numeral 112 denotes the end-tag, and the end-tag is embedded in the ending position in the table portion in the XML data 91.

Next, in step S26, the conversion process unit 11 creates, on the basis of "s_row1=header" serving as an anchor 111, an HTML description in such a manner that <type name>, <name>, and <price>, which are the element's names of the lower layer elements of <product list> and <product>, are written in the first row on the table. Next, in step S27, the item values corresponding to the item names are added, in the order specified in "MAKE_TABLE" in the HTML style specification 921, to the portions corresponding to the second and subsequent rows on the table created in step S26, and the HTML description is created.

Fig. 11 (e) shows the HTML description created in steps S26 and S27.

In Fig. 11 (e), the portion denoted by the numeral 113 corresponds to the header portion of the first row on the table created in step S26, and the portion denoted by the numeral 114 corresponds to the portion of the second and subsequent rows on the table.

After creating the HTML description as above, in step S28, the conversion process unit 11 adds the anchor of the start-tag 111 to the top portion of the HTML description in Fig. 11(e) (immediately below the <table> tag in Fig. 11 (e)), and also adds the anchor of the end-tag 112 to the bottom portion (immediately above the </table> tag in Fig. 11(e)), and replaces this HTML description with the "MAKE_TABLE (......) " portion in the HTML style specification 922. Then, in step S29, the result of the replacement is output to a file, as the HTML data 93 that is the conversion result, and this process is terminated.

As described above, in the data conversion performed by the structured data conversion device according to the present embodiment, it is possible to perform conversion by using the inverse conversion information that is efficiently embedded in order to prevent an increase in size of the data after the conversion even when the data to be converted includes repeated structures.

Next, the inverse conversion process on the structured document that was converted in the process shown in Fig. 10 will be explained.

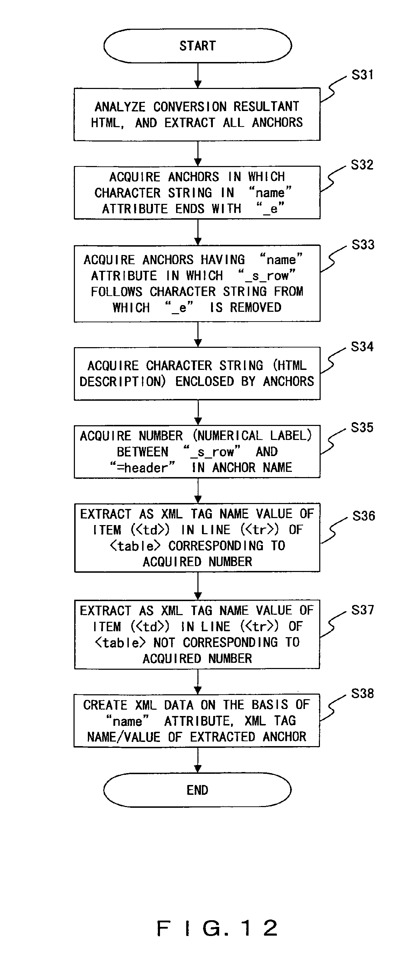

Fig. 12 is a flowchart for a process executed when the structured document that was converted into the table format by the structured data conversion device according to the present embodiment is to be inversely converted by the inverse conversion process unit 12.

In the explanation below, the operations performed by the inverse conversion process unit 12 will be explained by using an example in which the HTML data 93 converted by the conversion process unit 11 shown in Fig. 9 is inversely converted and the XML data 91 is obtained as the conversion result.

In Fig. 12, when the process starts, the inverse conversion process unit 12 reads out onto a memory unit the HTML data 93 that is the process target, analyzes the HTML data 93 in step S31, and extracts all the anchor tag portions.

Next, in step S32, the inverse conversion process unit 12 acquires anchors in which the character string in the "name" attribute portion ends with "_e" from among the anchors extracted in step S31. Then, the inverse conversion process unit 12 acquires, in step S33, the anchors having the "name" attribute in which "s_row" follows the character string from which "_e" is removed". Then, the inverse conversion process unit 12 acquires, in step S34, the HTML description that is the character string enclosed by the anchors acquired in steps S32 and S33.

Next, in step S35, the inverse conversion process unit 12 acquires the number (numerical label) that is disposed between "s_row" and "=header" in the character string portion in the "name" attribute portion of the anchor acquired in step S33. In this example, the character strings in the "name" attribute portion is "product list/product_s_row 1 =header"; accordingly, the acquired number is "1".

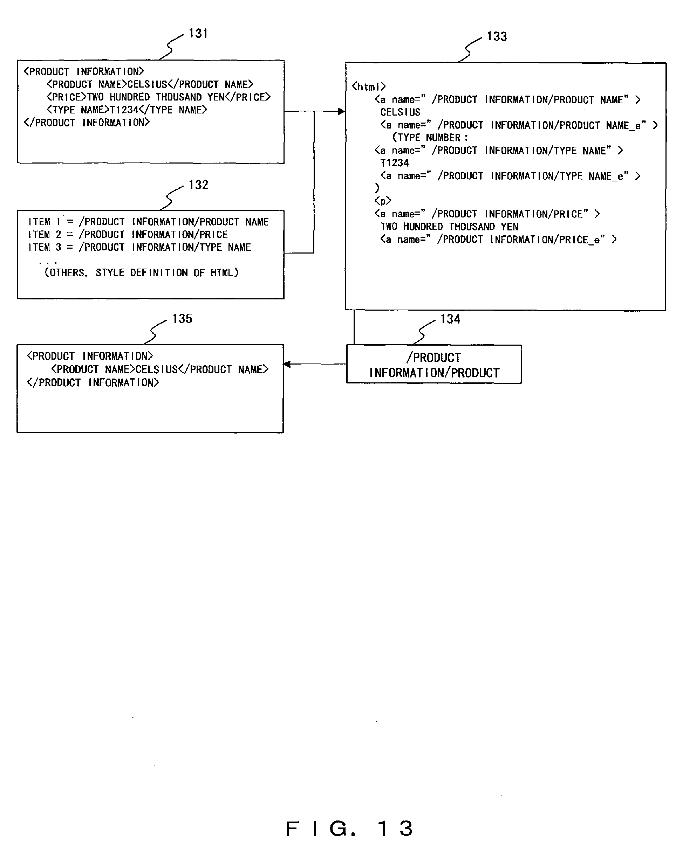

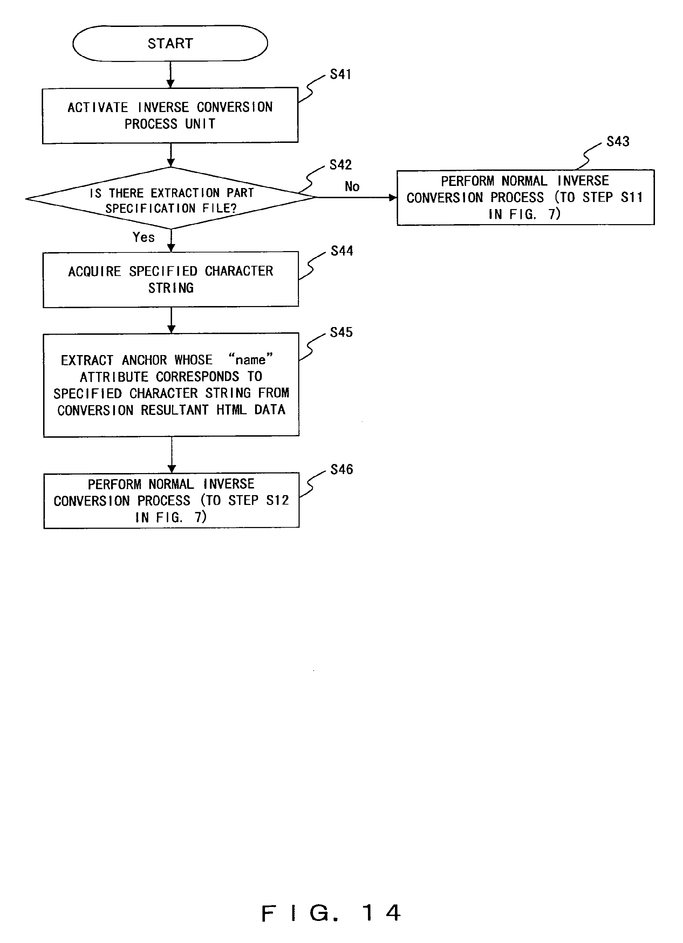

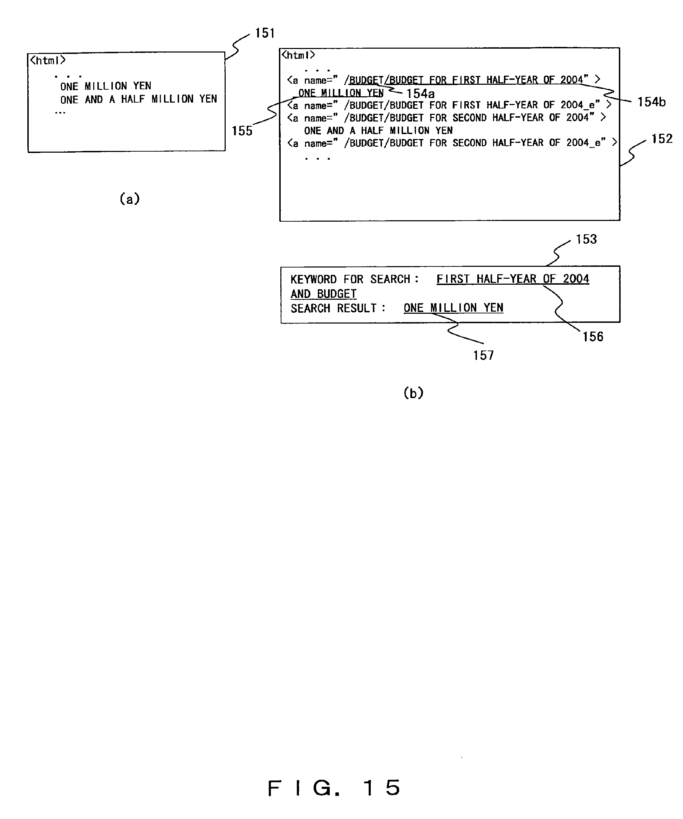

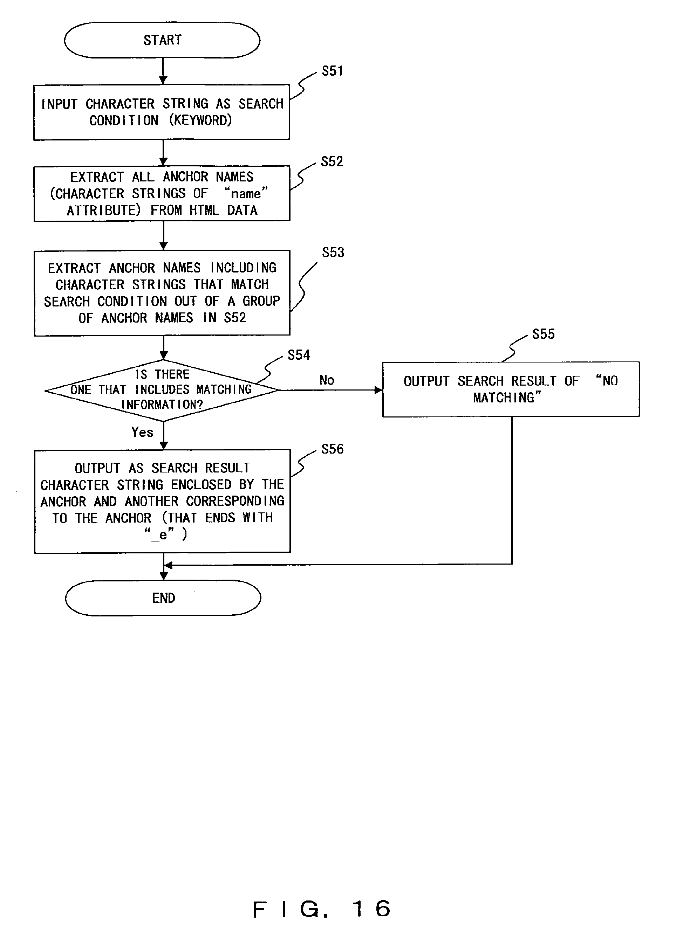

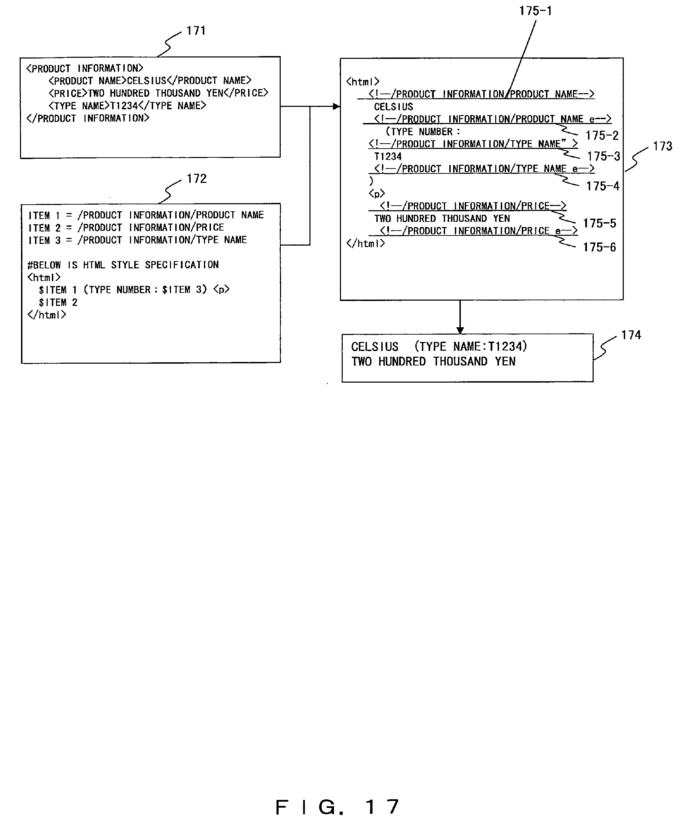

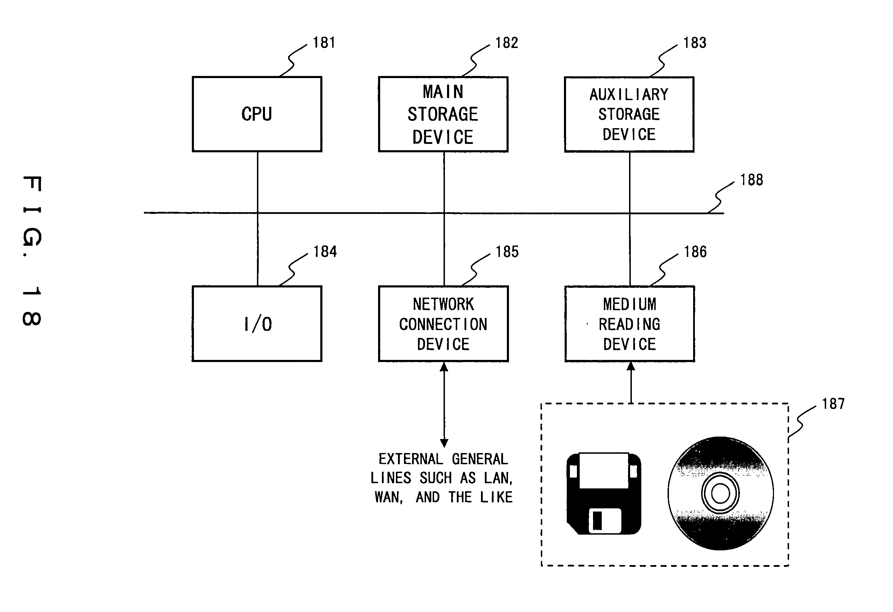

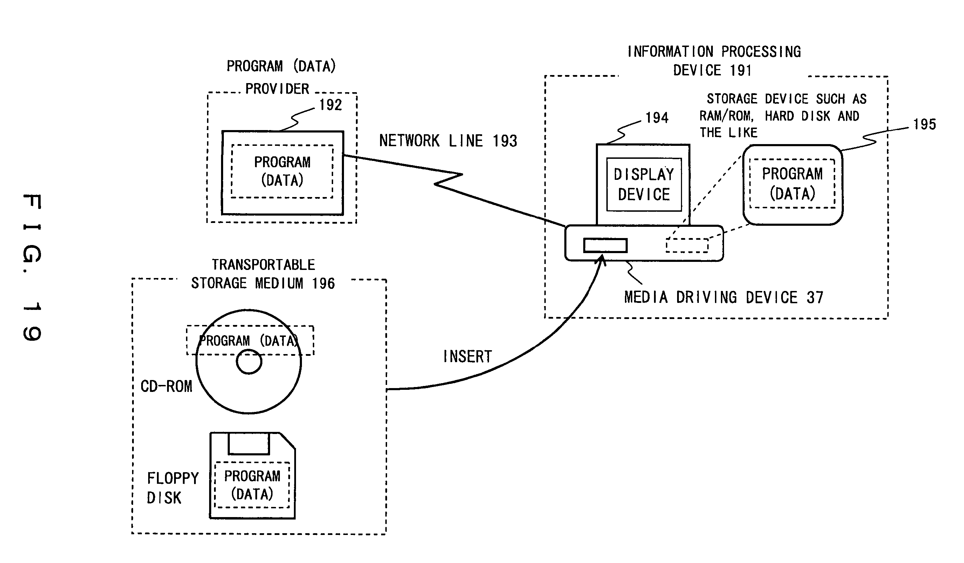

Next, in step S36, the inverse conversion process unit 12 extracts as an XML tag a value of the item (<td> tag) in the line (<tr> tag portion) that is on a layer under the <table> tag that corresponds to the number acquired in step S35. In the present case, XML tags <type name>, <name>, and <price> are extracted.

Next, in step S37, the inverse conversion process unit 12 extracts a value of the item (<td> tag) in the line (<tr> tag portion) that is on a layer under the <table> tag that does not correspond to the number acquired in step S35 (corresponding to the second and subsequent lines on the table in the present embodiment).

In step S38, the XML data is created from the "name" attribute portion, the XML tag name, and the XML tag value extracted in steps S33, S36, and S37, and the created XML data is output as the XML file that is the inverse conversion result, and the present process is terminated.

As described above, in the present embodiment, it is possible to reproduce the original structured document having repeated structures even when the structured document including the table format is inversely converted.

Additionally, in the above explanations, the structured document having repeated structures is converted into a structured document in the table format; however, the inverse conversion information can be similarly embedded and the original structured document can be reproduced even when the document is converted into a structured document in the list format (<ul> in the case of HTML).

Next, a partial inverse conversion process executed by the partial inverse conversion process unit 13 will be explained.

In this partial inverse conversion process, a part of the result of the conversion performed by the conversion process unit 11 is inversely converted.

In the partial inverse conversion process, only a particular portion is extracted from the HTML data that is the conversion result, and that extracted data is inversely converted into XML data. This partial inverse conversion process can be employed when only a particular portion in the HTML data that is the result of the conversion by the structured data conversion device according to the present embodiment is desired to be inversely converted; for example, when only schematic information of a product is necessary in the HTML data used for displaying a page for production information and detailed information on the product is not necessary.

Fig. 13 shows the partial inverse conversion process.

As described above, the conversion process unit 11 converts a structured document 131 that is the conversion target into a conversion result 133 on the basis of a conversion definition 132. In the above explanation, the original structured document 131 is created by inversely converting the entirety of the conversion result 133. However, in the partial inverse conversion process, the entirety of the conversion result 133 is not inversely converted, and a user is prompted to specify a part of the conversion result 133 using an extraction part specification file 134, and only the specified part is extracted to be inversely converted.

In Fig. 13, for example, when "/product information/product name" is specified on the basis of the extraction part specification file 134, the partial inverse conversion process unit 13 extracts the hierarchical part corresponding to "/product information/product name", inversely converts this part, and thereafter outputs the element portion specified on the basis of the extraction part specification file 134 as partial XML data 135 that is the result of the inverse conversion.

Fig. 14 is a flowchart showing the partial inverse conversion process executed by the partial inverse conversion process unit 13.

In Fig. 14, when the process starts, the partial inverse conversion process unit 13 activates the inverse conversion process unit 12 in step S41.

Next, in step S42, the partial inverse conversion process unit 13 determines whether or not there is an extraction part specification file 134 in which the part to be extracted is specified by the user in step S42. When there is not an extraction part specification file 134 (No in step S42), a normal inverse conversion is performed instead of the partial inverse conversion; thus, in step S43, the inverse conversion process unit 12 that was activated in step S41 starts to control the process, and thereafter the partial inverse conversion process unit 13 terminates its process. The inverse conversion process unit 12 that has started to control the process starts the process in step S11 and the subsequent processes shown in Fig. 7 in order to perform the inverse conversion.

When it is determined that there is an extraction part specification file 134 in step S42 (Yes in step S42), the part to be extracted has been specified by the user; accordingly, in step S44, the extraction part specification file 134 is read and the character string in the part that is specified to be extracted in the extraction part specification file 134 is acquired.

Next, in step S45, the partial inverse conversion process unit 13 extracts, from the HTML data 133 as the conversion result, the anchor having the same character string as the character string that is the part specified to be the "name" attribute in the extraction part specification file 134.

Then, the process is passed to the inverse conversion process unit 12 together with the anchor extracted in step S45, and the partial inverse conversion process unit 13 terminates its process. The inverse conversion process unit 12 performs the processes in and subsequent to step S12 shown in Fig. 7 by using the anchor received from the partial inverse conversion process unit 13, and outputs as the result of the inverse conversion the partial file in the XML format.

As described above, in the structured data conversion device according to the present embodiment, only the data that is specified by users can be inversely converted when the HTML data that is the conversion result is to be inversely converted into XML data.

Next, a search process executed by a search process unit 14 will be explained.

In the structured data conversion device according to the present embodiment, the same search process that is performed on XML data can be executed on the HTML data that is a result of conversion.

HTML is a language dedicated to displaying information in which only information on the display format is included, and a search process can not be performed for the content of data written in HTML. However, HTML data that is obtained as a result of a conversion performed by the structured data conversion device according to the present embodiment includes inverse conversion information, and searches for internal data can be performed by using this inverse conversion information.

Figs. 15(a) and 15(b) show the search process according to the present embodiment.

Usually in HTML data, internal data ("one million yen" in Fig. 15 (a)) does not indicate what the internal data is about, and a search that is based on the meaning of the content of the data (such as "budget" or the like) cannot be performed on this HTML data even if the internal data is on the budget.

In contrast, HTML data 152 (shown in Fig. 15 (b)) that is the result of conversion performed by the structured data conversion device according to the present embodiment includes as anchors inverse conversion information corresponding to the internal data, and the inverse conversion information includes the element names in the XML data that was the conversion target.

When, for example, it is desired to search for the budget in the first half-year of 2004 in the HTML data 152, the search process unit 14 searches for inverse conversion information in the anchor in the HTML data 152 on the basis of "first half-year of 2004" and "budget", which are input as search keywords 156 into the search process unit 14, and detects character strings 154a and 154b, which are the same as the search keywords 156; thereafter, the search process unit 14 outputs as a search result 157 corresponding internal data 155 (data that is enclosed by the start-tag having keywords for the search and the end-tag whose character string of the "name" attribute ends with "_e").

In the case shown in Fig. 15, when character strings of "first half-year of 2004" and "budget" are used for the keywords for the search in the HTML data 152, the inverse conversion information of "/budget/budget for first half-year of 2004" in the anchor is retrieved. Accordingly, the internal data of "one million yen" corresponding to that anchor is obtained as the search result 157.

Fig. 16 is a flowchart for the search process executed by the search process unit 14.

When the process shown in Fig. 16 starts, the search process unit 14 prompts the user to input a keyword for a search as the search condition in step S51.

Next, the search process unit 14 reads the HTML data 133, which is to be the search target, from a memory unit, and extracts from the HTML data 133 all the anchor names (character strings having the "name" attribute) corresponding to the inverse conversion information in step S52.

Next, the search process unit 14 compares a plurality of anchors extracted in step S52 with the search keywords input by the user in step S51, and extracts the anchors including the character strings specified as the keywords.

When there is an anchor name including the character string of the search keyword (Yes in step S54), the character string between the anchor including the corresponding anchor name and the anchor corresponding to that anchor is output as the search result; thereafter, this process is terminated.

When there is not an anchor name including the character string of the search keyword (No in step S54), the result of "There is no information matching the keyword" is output in step S55.

As described above, in the HTML data that is the result of the conversion performed by the structured data conversion device according to the present embodiment, the same search process that was performed on the original XML data can be performed.

In the above example, an example of a search process is used for the explanation. However, the HTML data that is the result of conversion performed by the structured data conversion device in the present embodiment can undergo processes that are ordinarily performed on XML data, such as data extraction, a calculation process, and the like other than searching.

Also, in the above explanations, the inverse conversion information is embedded as an anchor tag in the HTML data that is the conversion result. However, any other method of embedding the inverse conversion information can be used as long as the embedded inverse conversion information is not displayed when the HTML data is displayed by using a Web browser.

Fig. 17 shows an example of the case when the inverse conversion information is embedded in a comment tag in HTML data.

In Fig. 17, when XML data 171 that is to be converted is converted into XML data 173 on the basis of conversion definition 172, the inverse conversion information that is to be embedded is embedded as comments 175-1 through 175-6. In this case, the inverse conversion information is embedded as main texts of comments enclosed by "<!--" and "-->".

These comments 175 do not affect the display result 174 because the comments 175 in an embedded state are not read by a Web browser.

Fig. 18 shows a system configuration of a computer that realizes the present embodiment when the conversion process unit 11, the inverse conversion process unit 12, the partial inverse conversion process unit 13, and the search process unit 14 that are the components constituting the structured data conversion device according to the present embodiment are realized by software.

The computer shown in Fig. 18 comprises a CPU 181, a main storage device 182, an auxiliary storage device 183 such as a hard disk device or the like, an input/output (I/O) device 184 such as a keyboard, a display device or the like, a network connection device 185 such as a modem or the like, a medium reading device 186 used for reading information stored in a transportable storage device such as a disk, a magnetic tape, or the like, and these components are connected to one another via a bus 187.

In the computer shown in Fig. 12, the medium reading device 186 reads a program and data stored in a storage medium 188 such as a magnetic tape, a flexible disk, a CD-ROM device, MO device or the like, and the program and data are downloaded to the main storage device 182 or to the auxiliary storage device 183. Then, on the basis of these program and data, the CPU 181 realizes the respective functions of the above conversion process unit 11, the inverse conversion process unit 12, the partial inverse conversion process unit 13, and the search process unit 14 by using software.

Also, in some cases application software is added or deleted by using the storage medium 188 such as a flexible disk or the like in the computer system shown in Fig. 18. Accordingly, the present invention can be configured not only by the structured data conversion device or by the conversion method, but also by a computer readable storage medium 187 for causing a computer to realize the functions in the embodiments of the present invention when the present invention is to be realized by a computer.

In this case, examples of the above "storage medium" include, as shown in Fig. 19, a transportable storage medium 196 such as a CD-ROM disk, a flexible disk (or an MO disk, a DVD, a removable hard disk, or the like) or the like that can be used for a medium driving device 197; a storing unit (such as a database or the like) 192 in a device (such as a server or the like) provided externally with which communication is possible via a network line 193, a memory unit (RAM, a hard disk or the like) 195 in a main body 194 of the information processing device 191; or the like. Programs stored in the transportable storage medium 196 or in the storing unit (a database or the like) 192 are loaded into the memory unit (RAM or a hard disk or the like) 195 in a main body 194, and are executed.

Also, the present invention can be implemented not only by using the above described CD-ROM disk, DVD-ROM disk or the like as the storage media, but also by using various large capacity storage media that will be realized in the future such as next-generation optical disk storage media that use blue laser techniques such as Blu-ray Disks (registered trademark), AODs (Advanced Optical Discs), or the like; HD-DVD9, which uses red laser techniques; or Blue Laser DVDs, which use violet laser techniques.

According to the present invention, a design (structure) of data after conversion is created independently when a structured document is to be converted into data in a different structure, and it is possible to use the design for the conversion with only a very slight modification on the design. Accordingly, it is possible to manage and reuse data and design separately from each other.

In the above examples, conversion from XML documents into HTML documents and conversion from HTML documents into XML documents are explained. However, conversion performed by the document conversion utilization system according to the present embodiment is not limited to the above examples, and other forms of conversion including conversion from SGML documents into HTML documents and the like can be performed.

## Claims

1. A structured data conversion device that converts a set of first structured data into a set of second structured data that is described by a language different from that of the first structured data, comprising:
an inverse conversion information creation unit extracting data as inverse conversion information from the first structured data, the data that is extracted being deleted when the first structured data is converted into the second structured data and being necessary when the second structured data is inversely converted into the first structured data; and
an inverse conversion information storing unit embedding in the second structured data the inverse conversion information when the first structured data is converted into the second structured data.

2. The structured data conversion device according to claim 1, further comprising:
an inverse conversion unit inversely converting the second structured data into the first structured data by using the inverse conversion information embedded in the second structured data.

3. The structured data conversion device according to claim 1, wherein:
the inverse conversion information storing unit embeds the inverse conversion information in such a manner that a display result of the second structured data after conversion being displayed via a Web browser is not influenced.

4. The structured data conversion device according to claim 3, wherein:
the second structured data is data described in HTML, and the inverse conversion information storing unit embeds the inverse conversion information in an anchor tag of HTML.

5. The structured data conversion device according to claim 3, wherein:
the second structured data is data described in HTML, and the inverse conversion information storing unit embeds the inverse conversion information in a comment tag of HTML.

6. The structured data conversion device according to claim 1, wherein:
the inverse conversion information creation unit extracts the inverse conversion information on the basis of a conversion definition including information specifying a position, on a hierarchical structure, of an element in the first structured data.

7. The structured data conversion device according to claim 1, wherein:
when the first structured data includes repeated structures, the inverse conversion information creation unit creates the inverse conversion information for an entirety of the repeated structures, and the inverse conversion information storing unit embeds the inverse conversion information in such a manner that the embedded inverse conversion information corresponds to the entirety of the repeated structures.

8. The structured data conversion device according to claim 1, wherein:
when the first structured data includes repeated structures, the repeated structures are converted into a table when converting the first structured data into the second structured data.

9. The structured data conversion device according to claim 1, further comprising:
a partial inverse conversion unit inversely converting a part of the second structured data into the first structured data.

10. The structured data conversion device according to claim 1, further comprising:
a search unit for searching, on the basis of a search condition specified by a user, the second structured data that is a result of converting the first structured data.

11. The structured data conversion device according to claim 1, wherein:
the inverse conversion information is information that is necessary at the minimum for inversely converting the second structured data into the first structured data.

12. The structured data conversion device according to claim 11, wherein:
the inverse conversion information is information specifying a tag name in the first structured data and correspondence between, a tag and element's content.

13. The structured data conversion device according to claim 1, wherein:
the first structured data is data described in XML, and the second structured data is data described in HTML.

14. A structured data conversion method of converting a first structured data into a second structured data that is described by a language different from that of the first structured data, comprising:
reading from a memory unit the structured data that is to be converted;
extracting data as inverse conversion information from the first structured data, the data that is extracted being deleted when the first structured data is converted into the second structured data and being necessary when the second structured data is inversely converted into the first structured data; and
embedding in the second structured data the inverse conversion information when the first structured data is converted into the second structured data.

15. A computer readable transportable storage medium storing a program for causing a computer to execute, when the program is executed by a computer for converting a set of first structured data into a set of second structured data that is described by a language different from that of the first structured data:
reading from a memory unit the structured data that is to be converted;
extracting data as inverse conversion information from the first structured data, the data that is extracted being deleted when the first structured data is converted into the second structured data and being necessary when the second structured data is inversely converted into the first structured data; and
embedding in the second structured data the inverse conversion information when the first structured data is converted into the second structured data.
